# EUROPÄISCHE PATENTSCHRIFT

(11) **EP 1 632 408 B1**
(45) Veröffentlichungstag und Bekanntmachung des Hinweises auf die Patenterteilung: **06.07.2011**
(21) Anmeldenummer: 05090238.6
(22) Anmeldetag: 18.08.2005
(51) Int. Cl.: B60R 22/22

(54) **Gurtendbeschlagseinrichtung**
Safety belt connection device
Dispositif de connection de ceinture de sécurité

(30) Priorität: 26.08.2004 DE 102004041810
(43) Veröffentlichungstag der Anmeldung: 08.03.2006
(73) Patentinhaber: TAKATA - PETRI AG, 63743 Aschaffenburg (DE)
(72) Erfinder: Agret, Alain, 94140 Alfortville (FR); Glinka, Oliver, 89081 Ulm (DE)
(74) Vertreter: Baumgärtel, Gunnar

(56) Entgegenhaltungen:
- EP-A- 1 283 138
- DE-A1- 3 720 704
- DE-A1- 19 944 478
- DE-C1- 4 141 836
- DE-U1- 20 021 223
- FR-A- 2 809 694
- US-A- 5 236 220

## Beschreibung

Die Erfindung bezieht sich auf eine Gurtendbeschlagseinrichtung zum Befestigen eines Sicherheitsgurtes.

Aus der Offenlegungsschrift DE 37 20 704 A1 ist eine Gurtendbeschlagseinrichtung entsprechend dem Oberbegriff des Anspruchs 1 bekannt, bei der ein an einer klappbaren Sitzlehne gelagertes Gurtschloss mit einer klappbaren Sitzlehne mitgeschwenkt wird.

Der Erfindung liegt die Aufgabe zugrunde, eine Gurtendbeschlagseinrichtung anzugeben, die einen Fahrzeuginsassen, insbesondere beim Ein- oder Aussteigen in bzw: aus dem Fahrzeug, möglichst wenig behindert bzw. stört.

Diese Aufgabe wird bei einer Gurtendbeschlagseinrichtung der eingangs angegebenen Art erfindungsgemäß durch das kennzeichnende Merkmal des Anspruchs 1 gelöst. Vorteilhafte Ausgestaltungen der erfindungsgemäßen Gurtendbeschlagseinrichtung sind in Unteransprüchen angegeben.

Ein wesentlicher Vorteil der erfindungsgemäßen Gurtendbeschlagseinrichtung besteht darin, dass diese beispielsweise bei einem Einsatz in einem dreitürigen Fahrzeug eine optimale Zugänglichkeit zur Fahrzeug-Rückbank ermöglicht. Bei dreitürigen Fahrzeugen besteht nämlich das Problem, dass bei einem Nachvorneklappen der Rückenlehne des Fahrersitzes oder des Beifahrersitzes der Sicherheitsgurt aufgrund seiner Befestigung an der Gurtendbeschlagseinrichtung mitunter den Zugang zur hinteren Rückbank versperren und somit ein Erreichen der hinteren Rückbank erschweren kann. Dieser Nachteil wird bei der erfindungsgemäßen Gurtendbeschlagseinrichtung vermieden, weil nämlich die Gurtendbeschlagseinrichtung schwenkbar bzw. klappbar gelagert ist und mit der Rückenlehne derart gekoppelt ist, dass bei einem Schwenken der Rückenlehne die Gurtendbeschlagseinrichtung ebenfalls geschwenkt wird, wobei die Schwenkbewegungen der Rückenlehne und die der Gurtendbeschlagseinrichtung entgegengesetzt bzw. gegensinnig sind. Dies bedeutet, dass beispielsweise bei einem Schwenken der Rückenlehne in Fahrtrichtung nach vorne die Gurtendbeschlagseinrichtung nach hinten geschwenkt wird, so dass sie beim Einsteigen in das Fahrzeug in Richtung hinterer Rückbank nicht stört.

Vorzugsweise ist die Gurtendbeschlagseinrichtung derart ausgestaltet, dass sie von ihrer "Normalposition" bis zum Fahrzeugboden geschwenkt bzw. geklappt werden kann. Unter dem Begriff "Normalposition" wird nachfolgend diejenige Position der Gurtendbeschlagseinrichtung verstanden, in der sich diese beim "Normalbetrieb" des Fahrzeugs befindet. In der "Normalposition" kann der mit der Gurtendbeschlagseinrichtung befestigte Sicherheitsgurt somit in üblicher Weise verwendet und zum Anschnallen eingesetzt werden.

Gemäß einer vorteilhaften Ausgestaltung der Gurtendbeschlagseinrichtung ist vorgesehen, dass diese einen Federantrieb aufweist, der die zum Schwenken der Gurtendbeschlagseinrichtung erforderliche Schwenkkraft ausübt. Der Federantrieb kann beispielsweise eine Torsionsfeder aufweisen.

Die Gurtendbeschlagseinrichtung ist vorzugsweise darüber hinaus mit einer Verriegelungseinrichtung ausgestattet, die die Gurtendbeschlagseinrichtung in ihrer "Normalposition" verriegelt und ein Schwenken der Gurtendbeschlagseinrichtung durch den Federantrieb verhindert. Vorzugsweise steht die Verriegelungseinrichtung mit einem Auslöseelement in Verbindung, das die Verriegelungseinrichtung entriegelt und ein Schwenken der Gurtendbeschlagseinrichtung auslöst, sobald die Rückenlehne des Fahrzeugsitzes ihrerseits entriegelt und/oder in Fahrzeugrichtung nach vorne geschwenkt wird.

Das Auslöseelement kann beispielsweise mittelbar oder unmittelbar mit der Rückenlehne oder aber mit einer ein Schwenken der Rückenlehne freigebenden, sitzseitigen Entriegelungseinrichtung in Verbindung stehen.

Zur Koppelung der Gurtendbeschlagseinrichtung und der Rückenlehne können die Verriegelungseinrichtung und das Auslöseelement beispielsweise ein Getriebe bilden. Alternativ kann das Auslöseelement beispielsweise auch durch einen Auslösehebel gebildet sein, der mit der Rückenlehne oder mit der sitzseitigen Entriegelungseinrichtung der Rückenlehne in Verbindung steht und mit dem die Verriegelungseinrichtung der Gurtendbeschlagseinrichtung entriegelt wird, sobald die Rückenlehne geschwenkt oder zum Schwenken entriegelt wird.

Als besonders vorteilhaft wird es angesehen, wenn die Gurtendbeschlagseinrichtung eine Gurtstraffeinrichtung umfasst, mit der der Sicherheitsgurt im Falle eines Unfalls gestrafft wird. Die Gurtstraffeinrichtung weist vorzugsweise einen Gasgenerator und einen mit dem Gasgenerator in Verbindung stehendes Strafferrohr auf. In dem Strafferrohr ist beispielsweise ein Strafferkolben geführt, der über ein Strafferseil mit einer Gurtanbindungseinrichtung der Gurtendbeschlagseinrichtung in Verbindung steht und das Strafferseil und damit den Sicherheitsgurt bei Antrieb durch den Gasgenerator strafft.

Ein Schwenklager zum Schwenken der Gurtendbeschlagseinrichtung ist vorzugsweise an dem dem Gasgenerator abgewandten Ende des Strafferrohres angeordnet. Ein weiteres bzw. anderes Schwenklager der Gurtendbeschlagseinrichtung kann beispielsweise im Bereich eines Umlenkpunktes des Strafferseils angeordnet sein.

Die Gurtendbeschlagseinrichtung ist vorzugsweise in unmittelbarer Nähe des Fahrzeugsitzes, vorzugsweise dahinter oder darunter angebracht. Beispielsweise ist die Gurtendbeschlagseinrichtung direkt am Fahrzeugsitz angeordnet, so dass diese bei einem Verschieben des Fahrzeugsitzes mitbewegt wird. Alternativ kann die Gurtendbeschlagseinrichtung auch an der Fahrzeugkarosserie angeordnet sein. Der im Bereich des Umlenkpunktes des Strafferseils angeordnete Lagerpunkt der Gurtendbeschlagseinrichtung befindet sich dann vorzugsweise im Bereich der B-Säule des Fahrzeugs.

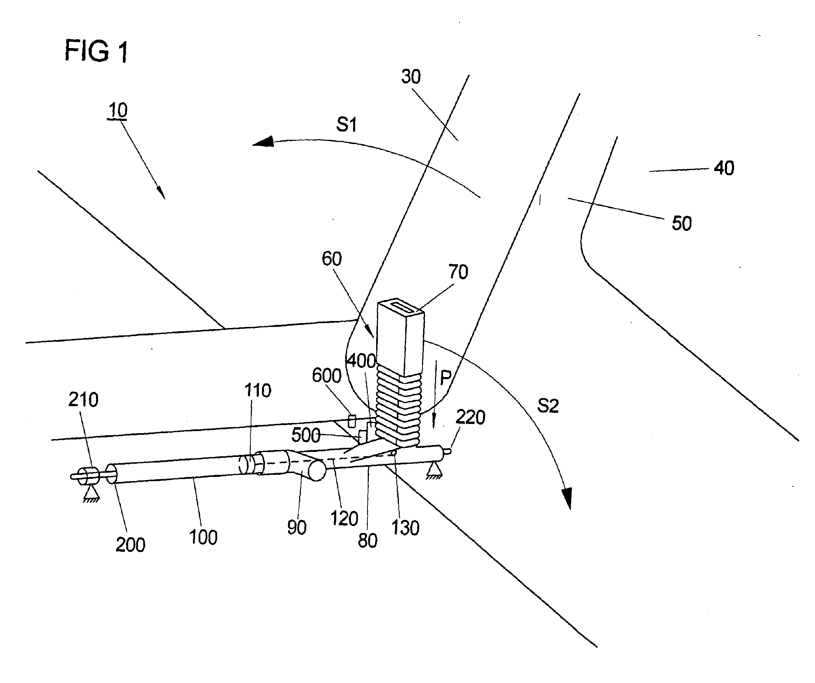

Die Erfindung wird nachfolgend anhand eines Ausführungsbeispiels erläutert. Dieses Ausführungsbeispiel ist in der Figur 1 gezeigt.

Man erkennt in der Figur 1 die Beifahrerseite 10 eines Kraftfahrzeugs. Auf der Beifahrerseite 10 ist ein Beifahrersitz 20 angeordnet, der mit einer Rückenlehne 30 ausgestattet ist. Darüber hinaus erkennt man in der Figur 1 die beifahrerseitige Außenwand 40 des Fahrzeugs mit der B-Säule 50.

Unmittelbar hinter dem Beifahrersitz 20 bzw. unter dem Beifahrersitz 20 ist eine Gurtendbeschlagseinrichtung 60 angebracht, die einen sogenannten "Endbeschlagsstraffer" bildet.

Die Gurtendbeschlagseinrichtung 60 weist eine Gurtanbindungseinrichtung 70 auf, mit der ein in der Figur 1 nicht dargestellter Sicherheitsgurt des Beifahrersitzes 20 befestigt wird. Zur Befestigung des Sicherheitsgurtes wird dabei dasjenige Ende des Sicherheitsgurtes herangezogen, das einem in der Figur 1 aus Gründen der Übersichtlichkeit ebenfalls nicht dargestellten Gurtaufroller des Sicherheitsgurtes abgewandt ist.

Die Gurtendbeschlagseinrichtung 60 weist neben der Gurtanbindungseinrichtung 70 außerdem eine Gurtstraffeinrichtung 80 auf, die mit der Gurtanbindungseinrichtung 70 unmittelbar zusammenwirkt. Die Gurtstraffeinrichtung 80 dient konkret dazu, im Falle eines Unfalls die Gurtanbindungseinrichtung 70 in Pfeilrichtung P nach unten, also in Richtung zum Fahrzeugboden, zu ziehen, um den Sicherheitsgurt zu straffen.

Die Gurtstraffeinrichtung 80 weist einen Gasgenerator 90 sowie ein mit diesem verbundenes Strafferrohr 100 auf. In dem Strafferrohr 100 ist ein Strafferkolben 110 in der Figur 1 schematisch angedeutet, der über ein Strafferseil 120 mit der Gurtanbindungseinrichtung 70 in Verbindung steht. Das Strafferseil 120 wird hierbei mittels eines Umlenkpunktes (bzw. Umlenkgliedes) 130 umgelenkt. Zum Straffen bzw. zum Herunterziehen der Gurtanbindungseinrichtung 70 wird der Strafferkolben mittels des Gasgenerators 90 zu einem dem Gasgenerator 90 abgewandten Ende 200 des Strafferrohres 100 ausgelenkt.

Wie in der Figur 1 durch Pfeile S1 und S2 angedeutet ist, lassen sich die Rückenlehne 30 und die Gurtendbeschlagseinrichtung 60 schwenken. Die Schwenkbewegung der Rückenlehne 30 und die der Gurtendbeschlagseinrichtung 60 sind dabei gekoppelt, und zwar derart, dass bei einem Schwenken der Rückenlehne 30 in Fahrtrichtung nach vorne die Gurtendbeschlagseinrichtung 60 nach hinten geschwenkt wird. Dies dient konkret dazu, ein Einsteigen in das Kraftfahrzeug auf eine hintere Sitzbank zu erleichtern. Bekanntermaßen besteht bei dreitürigen Fahrzeugen die Notwendigkeit, durch eine vordere Tür einzusteigen, um zur Rücksitzbank zu gelangen. Hierzu wird die Rückenlehne 30 des jeweiligen Vordersitzes in Fahrtrichtung nach vorn geklappt, um genügend Platz zum Einsteigen zu schaffen. Um nun zu verhindern, dass der Sicherheitsgurt, der an der Gurtanbindungseinrichtung 70 befestigt, ist, das Einsteigen behindert, wird die Gurtanbindungseinrichtung 70 automatisch nach hinten geklappt, sobald die Rückenlehne 30 nach vorne geklappt wird. Die Drehbewegungen sind also miteinander gekoppelt und invers.

Um ein Verschwenken der Gurtendbeschlagseinrichtung 60 zu ermöglichen, weist die Gurtendbeschlagseinrichtung 60 ein im Bereich des Endes 200 des Strafferrohres 100 angeordnetes, also fahrzeuginnenseitig befestigtes Lager 210 auf. Außerdem ist ein randseitiges Lager 220 vorhanden, das im Bereich des Umlenkpunktes 130 des Strafferseiles 120 und damit im Bereich der beifahrerseitigen Außenwand 40, konkret im Bereich der B-Säule 50 angeordnet ist.

Um ein automatisches Verschwenken der Gurtendbeschlagseinrichtung 60 zu ermöglichen, weist diese einen Federantrieb 400 auf, der derart vorgespannt ist, dass er stets eine die Gurtendbeschlagseinrichtung 60 verschwenkende Schwenkkraft auf die Gurtendbeschlagseinrichtung 60 ausübt. Im Normalbetrieb muss somit die Gurtendbeschlagseinrichtung 60 in ihrer "Normalposition" verriegelt werden, um ein ungewünschtes Verschwenken der Gurtendbeschlagseinrichtung 60 zu vermeiden. Hierfür ist die Gurtendbeschlagseinrichtung 60 außerdem mit einer Verriegelungseinrichtung 500 ausgestattet, die den Federantrieb bzw. die Gurtendbeschlagseinrichtung in ihrer Normalposition verriegelt und ein Schwenken der Gurtendbeschlagseinrichtung 60 unterbindet. Die Verriegelungseinrichtung 500 steht mit einem sitzseitigen Auslöseelement 600 in Verbindung, das die Verriegelungseinrichtung 500 entriegelt und ein Schwenken der Gurtendbeschlagseinrichtung 60 durch den Federantrieb 400 auslöst, sobald die Rückenlehne 30 entriegelt und/oder in Fahrtrichtung nach vorn geschwenkt wird.

Sobald die Verriegelungseinrichtung 500 entriegelt ist, kann somit der Federantrieb 400 die Schwenkbewegung der Gurtendbeschlagseinrichtung 60 auslösen und diese derart verschwenken, dass die Gurtanbindungseinrichtung 70 nach hinten und nach unten auf den Fahrzeugboden geschwenkt wird. Das Auslöseelement 600 kann beispielsweise an der Rückenlehne 30 angebracht sein, oder aber mit einem sitzseitigen Rückenlehnen-Entriegelungsmechanismus verbunden sein.

Die Verriegelungseinrichtung 500 sowie das Auslöseelement 600 können gemeinsam ein Getriebe bilden, das die Kopplung zwischen der Schwenkbewegung der Rückenlehne 30 und die der Gurtendbeschlagseinrichtung 60 steuert.

Alternativ kann das Auslöseelement 600 durch einen mit der Rückenlehne 30 oder der sitzseitigen Entriegelungseinrichtung in Verbindung stehenden Auslösehebel gebildet sein, mit dem die Verriegelungseinrichtung der Gurtendbeschlagseinrichtung 60 entriegelt wird, sobald die Rückenlehne 30 geschwenkt oder zum Schwenken ihrerseits entriegelt wird. Hierzu kann die Verrieglungseinrichtung 500 beispielsweise einen Anschlag aufweisen, der mit dem Auslösehebel zusammenwirkt.

### Bezugszeichenliste

- 10: Beifahrerseite
- 20: Beifahrersitz
- 30: Rückenlehne
- 40: beifahrerseitige Außenwand des Kraftfahrzeugs
- 50: B-Säule
- 60: Gurtendbeschlagseinrichtung
- 70: Gurtanbindungseinrichtung
- 80: Gurtstraffeinrichtung
- 90: Gasgenerator
- 100: Strafferrohr
- 110: Strafferkolben
- 120: Strafferseil
- 130: Umlenkpunkt des Strafferseils
- 200: ein Ende des Strafferrohrs
- 210: fahrzeuginnenseitiges Lager
- 220: randseitiges Lager
- 400: Federantrieb
- 500: Verriegelungseinrichtung
- 600: Auslöseelement

## Patentansprüche

1. Gurtendbeschlagseinrichtung (60) zur Befestigung eines Sicherheitsgurtes, wobei die Gurtendbeschlagseinrichtung (60) schwenkbar gelagert ist und mit der Rückenlehne (30) eines dem Sicherheitsgurt zugeordneten Fahrzeugsitzes (20) derart gekoppelt ist, dass bei einem Schwenken der Rückenlehne (30) selbsttätig auch die Gurtbeschlagseinrichtung (60) geschwenkt wird,
**dadurch gekennzeichnet, dass**
die Schwenkbewegung der Gurtendbeschlagseinrichtung- (60) und die der Rückenlehne (30) gegensinnig sind.

2. Gurtendbeschlagseinrichtung nach Anspruch 1, **dadurch gekennzeichnet, dass** diese von einer vorgegebenen Normalposition in Richtung Fahrzeugboden schwenkbar ist.

3. Gurtendbeschlagseinrichtung nach Anspruch 1 oder 2, **dadurch gekennzeichnet, dass** die Gurtendbeschlagseinrichtung (60) und die Rückenlehne (30) derart gekoppelt sind, dass bei einem Schwenken der Rückenlehne (30) in Fahrzeugrichtung nach vorne die Gurtendbeschlagseinrichtung (60) nach hinten selbsttätig geschwenkt wird.

4. Gurtendbeschlagseinrichtung nach einem der vorangehenden Ansprüche, **dadurch gekennzeichnet, dass** die Gurtendbeschlagseinrichtung (60) einen Federantrieb (400) aufweist, der die zum Schwenken der Gurtendbeschlagseinrichtung (60) erforderliche Schwenkkraft ausübt.

5. Gurtendbeschlagseinrichtung nach Anspruch 4, **dadurch gekennzeichnet, dass** der Federantrieb (400) eine Torsionsfeder aufweist.

6. Gurtendbeschlagseinrichtung nach einem der vorangehenden Ansprüche, **dadurch gekennzeichnet, dass** die Gurtendbeschlagseinrichtung (60) eine Verriegelungseinrichtung (500) aufweist, die die Gurtendbeschlagseinrichtung (60) in ihrer vorgegebenen Normalposition verriegelt und ein Schwenken der Gurtendbeschlagseinrichtung (60) durch den Federantrieb (400) verhindert.

7. Gurtendbeschlagseinrichtung nach Anspruch 6, **dadurch gekennzeichnet, dass** die Verriegelungseinrichtung (500) mit einem sitzseitigen Auslöseelement (600) in Verbindung steht, das die Verriegelungseinrichtung (500) entriegelt und ein Schwenken der Gurtendbeschlagseinrichtung (60) durch den Federantrieb (400) auslöst, sobald die Rückenlehne (30) entriegelt und/oder in Fahrtrichtung nach vorne geschwenkt wird.

8. Gurtendbeschlagseinrichtung nach Anspruch 7, **dadurch gekennzeichnet, dass** das sitzseitige Auslöseelement (600) mit der Rückenlehne. (30) oder mit einer ein Schwenken der Rückenlehne (30) freigebenden, sitzseitigen Entriegelungseinrichtung in Verbindung steht.

9. Gurtendbeschlagseinrichtung nach einem der vorangehenden Ansprüche, **dadurch gekennzeichnet, dass** die Verriegelungseinrichtung (500) und das Auslöseelement (600) ein Getriebe bilden.

10. Gurtendbeschlagseinrichtung nach einem der vorangehenden Ansprüche, **dadurch gekennzeichnet, dass** das Auslöseelement (600) durch eine mit der Rückenlehne (30) oder mit der sitzseitigen Entriegelungseinrichtung in Verbindung stehenden Auslösehebel gebildet ist, mit dem die Verriegelungseinrichtung (500) der Gurtendbeschlagseinrichtung (60) entriegelt wird, sobald die Rückenlehne (30) geschwenkt oder zum Schwenken ihrerseits entriegelt wird.

11. Gurtendbeschlagseinrichtung nach einem der vorangehenden Ansprüche, **dadurch gekennzeichnet, dass** die Gurtendbeschlagseinrichtung (60) eine Gurtstraffeinrichtung (80) umfasst, mit der der Sicherheitsgurt im Falle eines Unfalls gestrafft wird.

12. Gurtendbeschlagseinrichtung nach Anspruch 11, **dadurch gekennzeichnet, dass** die Gurtstraffeinrichtung (80) einen Gasgenerator (90) und ein mit dem Gasgenerator (90) in Verbindung stehendes Strafferrohr (100) aufweist.

13. Gurtendbeschlagseinrichtung nach Anspruch 12, **dadurch gekennzeichnet, dass** im Strafferrohr (100) ein Strafferkolben (110) geführt wird, der über ein Strafferseil (120) mit einer Gurtanbindungseinrichtung (70) in Verbindung steht und das Strafferseil und damit den Sicherheitsgurt beim Antrieb durch den Gasgenerator (90) strafft.

14. Gurtendbeschlagseinrichtung nach einem der vorangehenden Ansprüche 12 oder 13, **dadurch gekennzeichnet, dass** ein Schwenklager (210) der schwenkbaren Gurtendbeschlagseinrichtung (60) an dem dem Gasgenerator (90) abgewandten Ende (200) des Strafferrohres (100) angeordnet ist.

15. Gurtendbeschlagseinrichtung nach einem der vorangehenden Ansprüche 11 bis 14, **dadurch gekennzeichnet, dass** ein anderes Schwenklager (220) der Gurtendbeschlagseinrichtung (60) im Bereich eines Umlenkpunktes (130) des Strafferseils (120) angeordnet ist.

16. Gurtendbeschlagseinrichtung nach einem der vorangehenden Ansprüche, **dadurch gekennzeichnet, dass** die Gurtendbeschlagseinrichtung (60) in der Nähe des Fahrzeugsitzes (20), vorzugsweise dahinter oder darunter, angebracht ist.

17. Gurtendbeschlagseinrichtung nach Anspruch 16, **dadurch gekennzeichnet, dass** die Gurtendbeschlagseinrichtung (60) am Fahrzeugsitz (20) angebracht ist.

18. Gurtendbeschlagseinrichtung nach einem der vorangehenden Ansprüche 1 bis 16, **dadurch gekennzeichnet, dass** die Gurtendbeschlagseinrichtung (60) an der Fahrzeugkarosserie angebracht ist.

19. Gurtendbeschlagseinrichtung nach Anspruch 18, **dadurch gekennzeichnet, dass** das andere Schwenklager (220) der Gurtendbeschlagseinrichtung (60) im Bereich der B-Säule des Fahrzeugs angebracht ist.

## Claims

1. A belt end fitting device (60) for securing a seat belt, wherein the belt end fitting device (60) is mounted pivotably and is coupled in such a manner to the backrest (30) of a vehicle seat (20) assigned to the seat belt that, when the backrest (30) is pivoted, the belt fitting device (60) is automatically also pivoted,
**characterized in that**
the pivoting movement of the belt end fitting device (60) and that of the backrest (30) are in opposite directions.

2. The belt end fitting device as claimed in claim 1, **characterized in that** the latter can be pivoted from a predetermined normal position in the direction of the vehicle floor.

3. The belt end fitting device as claimed in claim 1 or 2, **characterized in that** the belt end fitting device (60) and the backrest (30) are coupled in such a manner that, when the backrest (30) is pivoted forward in the direction of travel, the belt end fitting device (60) is automatically pivoted rearward.

4. The belt end fitting device as claimed in one of the preceding claims, **characterized in that** the belt end fitting device (60) has a spring drive (400) which exerts the pivoting force required for pivoting the belt end fitting device (60).

5. The belt end fitting device as claimed in claim 4, **characterized in that** the spring drive (400) has a torsion spring.

6. The belt end fitting device as claimed in one of the preceding claims, **characterized in that** the belt end fitting device (60) has a locking device (500) which locks the belt end fitting device (60) in its predetermined normal position and prevents a pivoting of the belt end fitting device (60) by the spring drive (400).

7. The belt end fitting device as claimed in claim 6, **characterized in that** the locking device (500) is connected to a seat-side release element (600) which unlocks the locking device (500) and releases a pivoting of the belt end fitting device (60) by the spring drive (400) as soon as the backrest (30) is unlocked and/or is pivoted forward in the direction of travel.

8. The belt end fitting device as claimed in claim 7, **characterized in that** the seat-side release element (600) is connected to the backrest (30) or to a seat-side unlocking device releasing a pivoting of the backrest (30).

9. The belt end fitting device as claimed in one of the preceding claims, **characterized in that** the locking device (500) and the release element (600) form a mechanism.

10. The belt end fitting device as claimed in one of the preceding claims, **characterized in that** the release element (600) is formed by a release lever which is connected to the backrest (30) or to the seat-side unlocking device and with which the locking device (500) of the belt end fitting device (60) is unlocked as soon as the backrest (30) is pivoted or for its part is unlocked for pivoting.

11. The belt end fitting device as claimed in one of the preceding claims, **characterized in that** the belt end fitting device (60) comprises a belt-tensioning device (80) with which the seat belt is tensioned in the event of an accident.

12. The belt end fitting device as claimed in claim 11, **characterized in that** the belt-tensioning device (80) has a gas generator (90) and a tensioning tube (100) which is connected to the gas generator (90).

13. The belt end fitting device as claimed in claim 12, **characterized in that** a tensioning piston (110) is guided in the tensioning tube (100), is connected to a belt-connecting device (70) via a tensioning cable (120) and tensions the tensioning cable and therefore the seat belt when driven by the gas generator (90).

14. The belt end fitting device as claimed in one of the preceding claims 12 or 13, **characterized in that** a pivot bearing (210) of the pivotable belt end fitting device (60) is arranged at that end (200) of the tensioning tube (100) which faces away from the gas generator (90).

15. The belt end fitting device as claimed in one of the preceding claims 11 to 14, **characterized in that** another pivot bearing (220) of the belt end fitting device (60) is arranged in the region of a deflecting point (130) of the tensioning cable (120).

16. The belt end fitting device as claimed in one of the preceding claims, **characterized in that** the belt end fitting device (60) is fitted in the vicinity of the vehicle seat (20), preferably behind it or under it.

17. The belt end fitting device as claimed in claim 16, **characterized in that** the belt end fitting device (60) is fitted to the vehicle seat (20).

18. The belt end fitting device as claimed in one of the preceding claims 1 to 16, **characterized in that** the belt end fitting device (60) is fitted to the vehicle body.

19. The belt end fitting device as claimed in claim 18, **characterized in that** the other pivot bearing (220) of the belt end fitting device (60) is fitted in the region of the B-pillar of the vehicle.

## Revendications

1. Ferrure de connexion de ceinture de sécurité (60) pour la fixation d'une ceinture de sécurité, dans lequel la ferrure de connexion (60) est monté en pivotement et est accouplé au dossier (30) d'un siège de véhicule (20) associé à la ceinture de sécurité de telle façon que lors d'un pivotement du dossier (30), la ferrure de connexion (60) est également automatiquement pivoté,
**caractérisé en ce que**
le mouvement de pivotement de la ferrure de connexion (60) et celui du dossier (30) sont en sens opposé.

2. Ferrure de connexion selon la revendication 1, **caractérisé en ce que** celle-ci est capable de pivoter depuis une position normale prédéterminée en direction du plancher du véhicule.

3. Ferrure de connexion selon la revendication 1 ou 2, **caractérisé en ce que** la ferrure de connexion (60) et le dossier (30) sont accouplés de telle façon que lors d'un pivotement du dossier (30) vers l'avant dans la direction du véhicule, la ferrure de connexion (60) est pivoté automatiquement vers l'arrière.

4. Ferrure de connexion selon l'une des revendications précédentes, **caractérisé en ce que** la ferrure de connexion (60) comprend un entraînement à ressort (400) qui exerce la force de pivotement nécessaire pour le pivotement de la ferrure de connexion (60).

5. Ferrure de connexion selon la revendication 4, **caractérisé en ce que** l'entraînement à ressort (400) comprend un ressort de torsion.

6. Ferrure de connexion selon l'une des revendications précédentes, **caractérisé en ce que** la ferrure de connexion (60) comprend un moyen de verrouillage (500) qui verrouille le système de ferrure terminal (60) dans sa position normale prédéterminée et empêche un pivotement de la ferrure de connexion (60) par l'entraînement à ressort (400).

7. Ferrure de connexion selon la revendication 6, **caractérisé en ce que** le moyen de verrouillage (500) est en liaison avec un élément de déclenchement (60) du côté du siège, qui déverrouille le moyen de verrouillage (500) et déclenche un pivotement de la ferrure de connexion (60) par l'entraînement à ressort (400) dès que le dossier (30) est déverrouillé et/ou pivoté vers l'avant en direction de circulation.

8. Ferrure de connexion selon la revendication 7, **caractérisé en ce que** l'élément de déclenchement (600) du côté du siège est en liaison avec le dossier (30) ou avec un moyen de déverrouillage du côté du siège, qui libère un pivotement du dossier (30).

9. Ferrure de connexion selon l'une des revendications précédentes, **caractérisé en ce que** le moyen de verrouillage (500) et l'élément de déclenchement (600) forment un mécanisme.

10. Ferrure de connexion selon l'une des revendications précédentes, **caractérisé en ce que** l'élément de déclenchement (600) est formé par un levier de déclenchement qui se trouve en liaison avec le dossier (30) ou avec le moyen de déverrouillage du côté du siège, levier au moyen duquel le moyen de verrouillage (500) de la ferrure de connexion (60) est déverrouillé dès que le dossier (30) est pivoté ou déverrouillé en vue d'un pivotement de sa part.

11. Ferrure de connexion selon l'une des revendications précédentes, **caractérisé en ce que** la ferrure de connexion (60) comprend un système de mise en tension de ceinture (80) avec lequel la ceinture de sécurité est mise en tension dans le cas d'un accident.

12. Ferrure de connexion selon la revendication 11, **caractérisé en ce que** le système de mise en tension de ceinture (80) comprend un générateur de gaz (90) et un tube de mise en tension (100) qui se trouve en liaison avec le générateur de gaz (90).

13. Ferrure de connexion selon la revendication 12, **caractérisé en ce qu'**un piston de mise en tension (110) est guidé dans le tube de mise en tension (100), piston qui se trouve en liaison avec un moyen d'attache de ceinture (70) via un câble de mise en tension (120) et met le câble de mise en tension et avec lui la ceinture de sécurité sous tension lors de l'entraînement par le générateur de gaz (90).

14. Ferrure de connexion selon l'une des revendications 12 ou 13, **caractérisé en ce qu'**un palier de pivotement (210) de la ferrure de connexion (60) pivotante est agencé à l'extrémité (200) du tube de mise en tension (100) détournée du générateur de gaz (90).

15. Ferrure de connexion selon l'une des revendications 11 à 14, **caractérisé en ce qu'**un autre palier de pivotement (220) de la ferrure de connexion (60) est agencé dans la région d'un point de renvoi (130) du câble de mise en tension (120).

16. Ferrure de connexion selon l'une des revendications précédentes, **caractérisé en ce que** la ferrure de connexion (60) est monté au voisinage du siège de véhicule (20), de préférence derrière ou dessous celui-ci.

17. Ferrure de connexion selon la revendication 16, **caractérisé en ce que** la ferrure de connexion (60) est monté sur le siège de véhicule (20).

18. Ferrure de connexion selon l'une des revendications 1 à 16, **caractérisé en ce que** la ferrure de connexion (60) est monté sur la carrosserie de véhicule.

19. Ferrure de connexion selon la revendication 18, **caractérisé en ce que** l'autre palier de pivotement (220) de la ferrure de connexion (60) est monté dans la zone du montant "B" du véhicule.
